# EUROPÄISCHE PATENTSCHRIFT

(11) **EP 4 645 844 B1**
(45) Veröffentlichungstag und Bekanntmachung des Hinweises auf die Patenterteilung: **04.02.2026**
(21) Anmeldenummer: 24173002.7
(22) Anmeldetag: 29.04.2024
(51) Int. Cl.: H04N 1/12, H04N 1/00

(54) **EINRICHTUNG UND VERFAHREN ZUM SCANNEN VON BELEGEN**
DEVICE AND METHOD FOR SCANNING DOCUMENTS
DISPOSITIF ET PROCÉDÉ DE BALAYAGE DE DOCUMENTS

(43) Veröffentlichungstag der Anmeldung: 05.11.2025
(73) Patentinhaber: DATAWIN GmbH, 84030 Ergolding (DE)
(72) Erfinder: Stock, Thomas, 35447 Reiskirchen (DE)
(74) Vertreter: 2s-ip Schramm Schneider Bertagnoll Patent- und Rechtsanwälte Part mbB

(56) Entgegenhaltungen:
- JP-A- 2006 128 910
- US-B2- 10 212 304

## Beschreibung

Die Erfindung betrifft eine Einrichtung zum Einscannen von Belegen gemäß dem Oberbegriff des Anspruchs 1 und ein Verfahren zum Einscannen von Belegen gemäß dem Oberbegriff des Anspruchs 12.

Einrichtungen zum Einscannen von Belegen beispielsweise zu Archivierungszwecken sind im Stand der Technik bekannt. Wenn es um das Einscannen von größeren Mengen von Belegen geht, z. B. Eingangspost oder Registratur in Unternehmen oder Behörden, sollten die Scaneinrichtungen in der Lage sein, die Belege selbsttätig der optischen Aufnahmeeinheit zuzuführen. Dies geschieht üblicherweise mittels Einzugsvorrichtungen, welche die einzelnen Belege an ihren Rändern fassen und bewegen. Hierzu weisen Einzugsvorrichtungen angetriebene Rollen auf, die jeden einzelnen Beleg mittels Haftreibung erfassen und in den Scanerfassungsbereich der optischen Aufnahmeeinheit transportieren, wo der Beleg dann optisch abgetastet wird. Eine Einrichtung zum Einscannen ist aus der US 10 212 304 bekannt.

Eine besondere Herausforderung stellen kleine, nicht rechteckig geformte oder brüchige, z.B. sehr alte Belege dar. Weil diese nur schwierig mit Rollen zu erfassen und zu transportieren sind, müssen sie üblicherweise mittels Flachbettscanner abgetastet werden. Nachteilig hieran ist, dass die Belege per Hand auf die Glasscheibe des Flachbettscanners aufgelegt werden müssen. Das ist nicht nur umständlich sondern auch fehleranfällig, weil die Belege beim Schließen des Deckels verrutschen können.

Außerdem nehmen derartige manuelle Schritte eine gewisse Zeit in Anspruch, während der der Flachbettscanner pausieren muss.

Daher ist es eine Aufgabe der vorliegenden Erfindung, eine Einrichtung zum Scannen von Belegen und ein entsprechendes Verfahren zum Scannen von Belegen zu schaffen, welche die genannten Probleme zumindest teilweise beseitigen.

Diese Aufgabe wird gemäß der Erfindung mit einer Einrichtung zum Scannen von Belegen mit den Merkmalen nach Anspruch 1 und ein Verfahren zum Scannen von Belegen mit den Merkmalen nach Anspruch 12 gelöst. Vorteilhafte Ausführungsformen der Erfindung sind in den jeweiligen abhängigen Ansprüchen definiert.

Bereitgestellt wird demnach eine Einrichtung zum Scannen von Belegen, umfassend eine Scaneinheit und eine Beleg-Transportvorrichtung, wobei die Scaneinheit dazu ausgestaltet ist, in einem Scanerfassungsbereich die Belege optisch abzutasten, wobei die Beleg-Transportvorrichtung ausgestaltet ist, die Belege aufzunehmen, in den Scanerfassungsbereich zu transportieren, wobei die Beleg-Transportvorrichtung zwei Endlosbänder umfasst, welche zumindest in dem Scanerfassungsbereich parallel zueinander verlaufen und dazu ausgestaltet sind, im Scanerfassungsbereich die Belege zwischen ihren einander zugewandten Bandoberflächen zu führen, und wobei zumindest eines der Endlosbänder einen für die Scaneinheit transparenten Abschnitt aufweist.

So können die Belege ohne Relativbewegungen, Reibungen oder der Gefahr des Hängenbleibens durch die Einrichtung zum Scannen transportiert und gescannt werden.

Vorteilhafte Weiterbildungen der Erfindung können die folgenden Merkmale umfassen.

Die Endlosbänder können in dem Scanerfassungsbereich so verlaufen, dass sich ihre einander zugewandten Oberflächen berühren.

Beide Endlosbänder können für die Scaneinheit transparente Abschnitte aufweisen, und die Scaneinheit kann eine erste optische Abtastvorrichtung mit einem ersten optischen Abtasterfassungsbereich und eine zweite optische Aufnahmevorrichtung mit einem zweiten optischen Abtasterfassungsbereich aufweisen, und der Scanerfassungsbereich kann durch den ersten Abtasterfassungsbereich und den zweiten Abtasterfassungsbereich gebildet sein, wobei die erste Abtastvorrichtung hinter der Bandoberfläche des einen Endlosbands angeordnet ist und die zweite Abtastvorrichtung hinter der Bandoberfläche des zweiten Endlosbands angeordnet ist und der zweite Abtasterfassungsbereich in Bandlaufrichtung gegen den ersten Abtasterfassungsbereich versetzt ist, so dass der zweite Abtasterfassungsbereich außerhalb des ersten Abtasterfassungsbereich angeordnet ist.

Auf diese Weise können die Belege beidseitig (Vorder- und Rückseite) simultan, also in einem einzigen Durchgang durch die Scaneinrichtung gescannt werden.

Die Beleg-Transportvorrichtung kann so ausgestaltet sein, dass die beiden Endlosbänder zumindest in dem Scanerfassungsbereich horizontal verlaufen, wobei eines der Endlosbänder ein unteres Endlosband darstellt und das andere der Endlosbänder ein oberes Endlosband darstellt.

Die Einrichtung kann weiter aufweisen: Einen Beleg-Aufnahmebereich in Bandlaufrichtung vor dem Scanerfassungsbereich, in welchem das untere Endlosband horizontal und bedeckungsfrei vom oberen Endlosband verläuft.

Die Einrichtung kann ferner aufweisen: Einen Beleg-Abgabereich in Bandlaufrichtung nach dem Scanerfassungsbereich, in welchem das untere Endlosband vertikal und bedeckungsfrei vom oberen Endlosband verläuft.

Die Einrichtung kann ferner aufweisen: eine Einrichtung zum Reinigen der Endlosbänder.

Die Einrichtung kann ferner aufweisen: Eine Einrichtung zum Trocknen der Endlosbänder.

Ferner kann die Einrichtung aufweisen: Eine Einrichtung zum elektrostatischen Aufladen eines der Endlosbänder und zumindest eine Einrichtung zum elektrostatischen Entladen der Endlosbänder, wobei die Einrichtung zum elektrostatischen Aufladen in Bandlaufrichtung vor der dem Scanerfassungsbereich angeordnet ist und zumindest eine Einrichtung zum elektrostatischen Entladen in Bandlaufrichtung hinter dem Scanerfassungsbereich angeordnet ist.

Ferner aufweisen kann die Einrichtung eine Bandführungseinrichtung, welche die Endlosbänder mittels Luftkisseneffekt senkrecht zur Bandoberfläche führt.

Es kann auch eine Bandzentriereinrichtung vorgesehen sein, welche die Endlosbänder in Bandebene quer zur Laufrichtung zentriert.

Gemäß einem weiteren Aspekt der Erfindung bereitgestellt wird ein Verfahren zum Scannen von Belegen, insbesondere mittels einer Einrichtung gemäß der oben beschriebenen Erfindung und ihrer Varianten, wobei die Belege mittels einer Beleg-Transportvorrichtung aufgenommen und zu einem Scanerfassungsbereich einer Scaneinheit transportiert werden und von der Scaneinheit optisch abgetastet werden, wobei die Belege mittels zweier Endlosbänder transportiert werden, welche zumindest in dem Scanerfassungsbereich parallel zueinander verlaufen und im Scanerfassungsbereich die Belege zwischen ihren einander zugewandten Bandoberflächen führen und dass zumindest eines der Endlosbänder einen für die Scaneinheit transparenten Abschnitt aufweist.

Hierbei können die Endlosbänder, in dem Scanerfassungsbereich so verlaufen, dass sich ihre einander zugewandten Oberflächen berühren.

Beide Endlosbänder können für die Scaneinheit transparente Abschnitte aufweisen, und die Belege können durch die Scaneinheit mittels einer ersten optischen Abtastvorrichtung mit einem ersten optischen Abtasterfassungsbereich und mittels einer zweiten optischen Aufnahmevorrichtung mit einem zweiten optischen Abtasterfassungsbereich optisch abgetastet werden, und der Scanerfassungsbereich kann durch den ersten Abtasterfassungsbereich und den zweiten Abtasterfassungsbereich gebildet ist, wobei die erste Abtastvorrichtung hinter der Bandoberfläche des einen Endlosbands angeordnet ist und die zweite Abtastvorrichtung hinter der Bandoberfläche des zweiten Endlosbands angeordnet ist und der zweite Abtasterfassungsbereich kann in Bandlaufrichtung gegen den ersten Abtasterfassungsbereich versetzt sein, so dass der zweite Abtasterfassungsbereich außerhalb des ersten Abtasterfassungsbereichs angeordnet ist.

Im Folgenden werden Ausführungsbeispiele der Erfindung unter Bezugnahme auf die beigefügte Zeichnung näher beschrieben. Es zeigt:
- Fig. 1: eine perspektivische Ansicht einer Vorrichtung zum Scannen von Belegen gemäß einem Ausführungsbeispiel der Erfindung,
- Fig. 2: einen vergrößerten Ausschnitt aus Fig. 1 und
- Fig. 3: ein Endlosband.

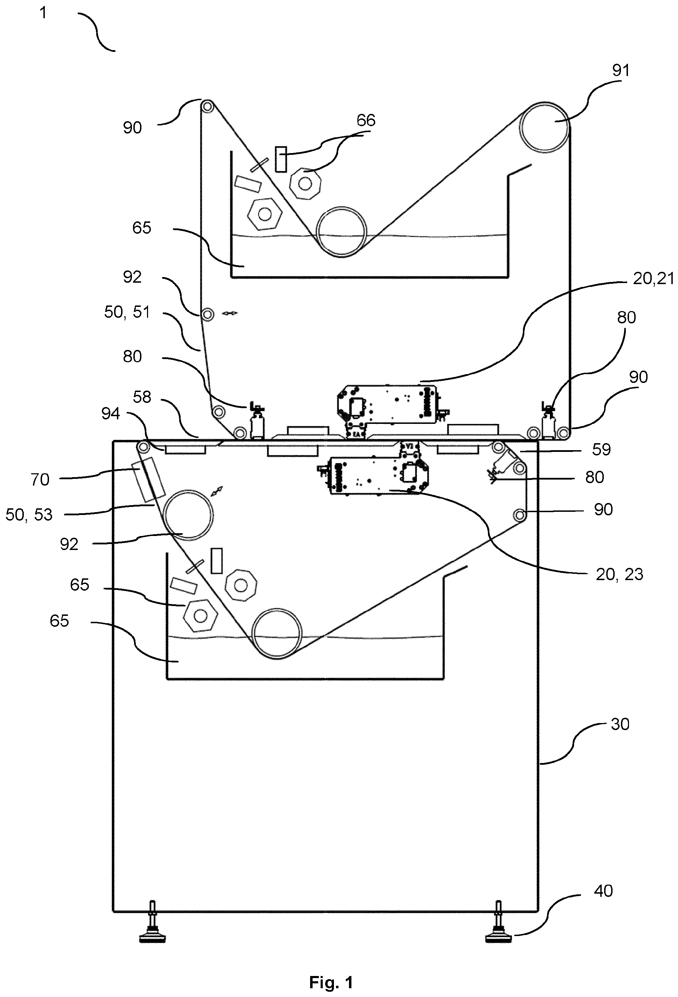

Fig. 1 zeigt eine Schnittansicht einer Einrichtung 1 zum Scannen von Belegen gemäß einem Ausführungsbeispiel der Erfindung. Die Einrichtung 1 zum Scannen von Belegen ist als Standgerät ausgebildet und weist ein Gehäuse 30 mit Standfüßen 40 auf. Die Scaneinrichtung 1 ist dazu ausgestaltet, die Belege einzuscannen.

Die Scaneinrichtung 1 umfasst eine Scaneinheit 20 und eine Beleg-Transportvorrichtung 50, wobei die Scaneinheit 20 dazu ausgestaltet ist, in einem Scanerfassungsbereich 25 die Belege optisch abzutasten, wobei die Beleg-Transportvorrichtung 50 ausgestaltet ist, die Belege aufzunehmen und in den Scanerfassungsbereich 25 zu transportieren. Die Scaneinheit 20 ist unbeweglich. Sie erzeugt Scanbilder der Belege durch optisches Abtasten der Belegoberflächen.

Die Beleg-Transportvorrichtung 50 umfasst zwei Endlosbänder 51, 53, welche zumindest in dem Scanerfassungsbereich 25 parallel zueinander verlaufen und dazu ausgestaltet sind, im Scanerfassungsbereich 25 die Belege zwischen ihren einander zugewandten Bandoberflächen 52, 54 der Endlosbänder 51, 53 zu führen.

Die Endlosbänder 51, 53 verlaufen in dem Scanerfassungsbereich 25 nicht nur parallel sondern auch horizontal. Ihre einander zugewandten Oberflächen 52, 54 berühren einander über einen gewissen Anpressdruck gegeneinander und auch auf die zwischen den beiden Oberflächen 52, 54 transportierten Belege aus.

Die Beleg-Transportvorrichtung 50 ist so ausgestaltet, dass sich die beiden Endlosbänder 51, 53 in dem Scanerfassungsbereich 25 mit derselben Bandlaufgeschwindigkeit v und in derselben Richtung bewegen, also synchron zueinander, so dass die transportierten Belege dort quasi gleitreibungsfrei transportiert werden können, also sich bezüglich beider Endlosbänder 51, 53 nicht bewegen. Dort ist auch die Bandlaufrichtung 55 beider Endlosbänder 51, 53 definiert. Die Bandlaufrichtung 55 der beiden Endlosbänder 51, 53 ist in dem Scanerfassungsbereich 25 die Horizontale.

Das vorliegende Ausführungsbeispiel ist dazu ausgestaltet, jeden Beleg mit seiner Vorderseite und seiner Rückseite in einem Durchgang durch den Scanerfassungsbereich 25 optisch abzutasten und Bilder zu erzeugen, Demnach weisen beide Endlosbänder 51, 53 für die Scaneinheit 20 transparente Abschnitte 56, 57 auf, und die Scaneinheit 20 umfasst zwei Abtastvorrichtungen 21, 23, eine für die Vorderseite der Belege und eine für deren Rückseite.

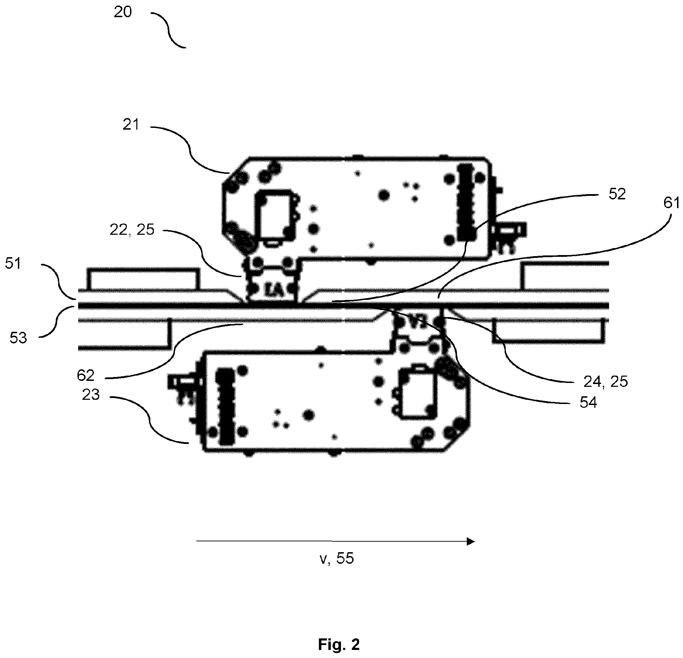

Fig. 2 zeigt die Scaneinheit 20 vergrößert. Die Scaneinheit 20 umfasst eine erste, obere optische Abtastvorrichtung 21 mit einem ersten optischen Abtasterfassungsbereich 22 und eine zweite, untere optische Aufnahmevorrichtung 23 mit einem zweiten optischen Abtasterfassungsbereich 24. Der Scanerfassungsbereich 25 ist durch den ersten Abtasterfassungsbereich 22 und den zweiten Abtasterfassungsbereich 24 gebildet. Die erste Abtastvorrichtung 21 ist hinter der Bandoberfläche 52 des einen Endlosbandes 51 angeordnet, während die zweite Abtastvorrichtung 23 hinter der Bandoberfläche 54 des zweiten Endlosbandes 53 angeordnet ist. Das heißt, die jeweilige Abtastvorrichtung 51, 53 ist jeweils auf der der Bandoberfläche im Scanerfassungsbereich 25 abgewandten Seite des Endlosbandes angeordnet.

Der zweite Abtasterfassungsbereich 24 ist in Bandlaufrichtung 55, also horizontal, gegen den ersten Abtasterfassungsbereich 22 versetzt, so dass der zweite Abtasterfassungsbereich 24 außerhalb des ersten Abtasterfassungsbereichs 22 angeordnet ist und der erste Abtasterfassungsbereich 24 außerhalb des zweiten Abtasterfassungsbereichs 24 ist. Dies gewährleistet auf einfache Weise, dass die eine Abtastvorrichtung 21, 23 nicht im Hintergrund des Scanbilds der jeweils anderen Abtastvorrichtung 23, 21 erscheint.

Der Hintergrund 61, 62 im jeweiligen Abtasterfassungsbereich sollt in der Regel uniform sein, also z.B. weiß, schwarz oder grau oder sonst einfarbig, damit sich die abgetasteten Belege in den Scanbildern gut vom Hintergrund 61, 62 abheben können.

Bei den Abtastvorrichtungen 21, 23 kann es sich um CCD-Linienkameras handeln, es könnten aber auch Flächenkameras eingesetzt werden. Dementsprechend ist der jeweilige Abtasterfassungsbereich 22, 24 linienartig oder flächenhaft.

Die Beleg-Transportvorrichtung 50 weist des Weiteren einen Belegaufnahmebereich 58 in Bandlaufrichtung 55 vor der Scaneinheit 20 auf, in welchem das untere Endlosband 53 horizontal und bedeckungsfrei vom oberen Endlosband 51 verläuft. Dort können die abzutastenden Belege auf das untere Endlosband 53 aufgelegt werden, sei es manuell, sei es automatisch, z. B. mittels einer Bestückungsvorrichtung.

Des Weiteren weist die Beleg-Transportvorrichtung 50 einen Beleg-Abgabereich 59 in Bandlaufrichtung 55 nach dem Scanerfassungsbereich 25 auf, in welchem das untere Endlosband 53 vertikal und bedeckungsfrei vom oberen Endlosband 51 verläuft. Dort können die abgetasteten Belege vom der Beleg-Transportvorrichtung 50 abgegeben werden, indem sie vom unteren Endlosband 53 herunterfallen, etwa in einen Sammelbehälter (nicht gezeigt).

Die Beleg-Transportvorrichtung umfasst eine Umlenkeinrichtung 90 für jedes Endlosband 51, 53, über welche das jeweilige Endlosband 51, 53 umgelenkt wird. Die Umlenkeinrichtung des ersten Endlosbandes 51 ist oberhalb des Scanerfassungsbereichs 25 angeordnet, während die Umlenkeinrichtung des zweiten Endlosbandes 53 unterhalb des Scanerfassungsbereichs 25 angeordnet ist. Auf diese Weise wird das obere Endlosband 51 nach oben zurückgeführt, während das untere Endlosband 53 nach unten zurückgeführt wird.

Die Beleg-Transportvorrichtung 50 umfasst weiterhin eine Einrichtung 65 zum Reinigen der Endlosbänder 51, 53. Diese können Flüssigkeitsbecken, z. B. Wasser oder Reinigungsflüssigkeiten enthaltend, sein, durch welche die jeweiligen Endlosbänder 51, 53 hindurchgeführt werden.

Weiter ist eine Einrichtung 66 zum Trocknen der Endlosbänder 51, 53 vorgesehen. Dies kann z.B. mittels Luftstrom erfolgen, der in Bandlaufrichtung nach dem Reinigungseinrichtung auf das jeweilige Endlosband 51, 53 gerichtet ist.

Damit die Belege besser an der Beleg-Transportvorrichtung 50 haften bleiben, ist eine Einrichtung 70 zum elektrostatischen Aufladen zumindest eines der Endlosbänder 51, 53 vorgesehen, z. B. ein Ionisationsstab. Diese Einrichtung 70 ist in Bandlaufrichtung 55 vor der Beleg-Aufnahme 56 angeordnet, und zwar am unteren Band 53.

Des Weiteren ist eine Einrichtung 80 zum elektrostatischen Entladen der Endlosbänder vorgesehen, die beim unteren Endlosband 53 in Bandlaufrichtung nach der Scanerfassungsbereich 25 angeordnet ist. Beim oberen Endlosband 51 kann eine derartige Entladeeinrichtung 80 vor und auch nach dem Scanerfassungsbereich 25 angeordnet sein.

Die Belege werden somit zunächst durch die elektrostatische Aufladung an dem unteren Endlosband 53 gehalten, bis das obere Endlosband 51 hinzukommt und die Belege dann zwischen beiden Endlosbändern 51, 53 einklemmt werden.

Dann wird so schnell wie möglich die elektrostatische Aufladung der Endlosbänder wieder entfernt.

Die Beleg-Transportvorrichtung 50 weist weiter eine Bandführungseinrichtung 94 auf, welche die Endlosbänder 51, 53 z.B. mittels Luftkisseneffekt senkrecht zur Bandoberfläche führt.

Ebenfalls vorgesehen ist eine Bandzentriereinrichtung 91, welche die Endlosbänder 51, 53 in Bandebene quer zur Bandlaufrichtung 55 zentriert.

Ferner ist eine Spanneinrichtung 92 vorgesehen, welche für die richtige Bandspannung der Endlosbänder 51, 53 sorgt.

Selbstverständlich ist auch eine Antriebseinrichtung vorgesehen, welche die beiden Endlosbänder 51, 53 antreibt, wobei dafür gesorgt ist, dass sich die beiden Endlosbänder 51, 53 mit derselben Bandgeschwindigkeit v bewegen, also synchron zueinander. Die Bandgeschwindigkeit v ihrerseits mag variabel einstellbar sein.

All die genannten Eirichtungen 90-93 können Rollen umfassen.

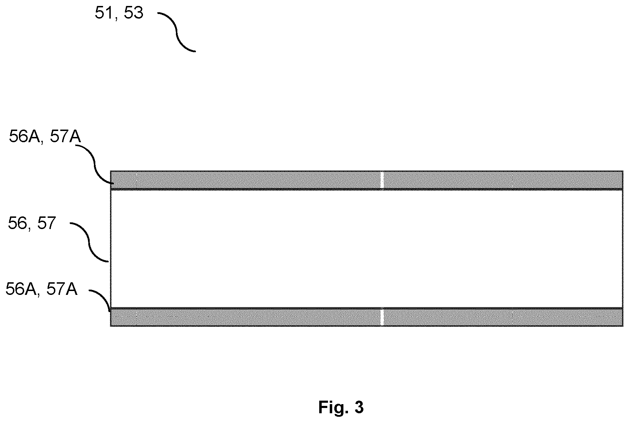

Fig. 3 illustriert das Endlosband 51, 53. Beide Endlosbänder 51, 53 im Ausführungsbeispiel müssen zumindest in demjenigen Flächenlängsabschnitt 56, 57 für den Scanerfassungsbereich 25 der Scaneinheit 20 optisch transparent sein, wo die Belege aufliegen. Vorzugsweise sind die Endlosbänder 51, 53 auf ihrer gesamten Breite optisch transparent. Als Material für die Endlosbänder kommt Kunststoff, z.B. TPU, in Frage. Möglich ist aber auch, dass die Endlosbänder 51, 53 nichttransparente Bereiche haben, z.B. an ihren Rändern. Dort könnten die Endlosbänder 51, 53 andere Struktur haben, z. B. könnten Verstärkungen vorgesehen sein, welche Antrieb oder Zentrierung der Endlosbänder begünstigen und/oder den Bandverschleiß verringern.

Beim oben beschriebenen Ausführungsbeispiel können die Belege simultan beidseitig optisch abgetastet werden, also Vorderseite und Rückseite der Belege. Wenn die Abtastung einer einzigen Belegseite ausreicht, umfasst die Scaneinheit 20 lediglich eine einzige Abtastvorrichtung 51. Dann muss auch nur eines der Endlosbänder 51, 53 transparent sein, nämlich dasjenige, welches im Scanerfassungsbereich 25 der Abtastvorrichtung 51 zugewandt ist. Das andere Endlosband bildet dann im Scanerfassungsbereich 25 den Hintergrund und kann einfarbig gestaltet sein.

Auch könnte vorgesehen sein, dass Beleg-Zuführung und Beleg-Entnahme von derselben Seite des Scanerfassungsbereichs 25 erfolgen. Dann ist die Bandlaufrichtung 55 umkehrbar.

Auch muss die Bandlaufrichtung 55 im Scanerfassungsbereich 25 nicht streng horizontal orientiert sein. Abhängig vom der Haftreibung der Endlosbänder lassen sich Konfigurationen bilden, bei denen Bandlaufrichtung 55 im Scanerfassungsbereich 25 abweichend von der Horizontalen ist.

Die Endlosbänder 51, 53 könnten auch beide entweder oberhalb oder unterhalb der Scanerfassungsbereichs 25 zurückgeführt werden. Dies könnte die Höhe des Gehäuses 30 verringern, weil dann z. B. eines der Flüssigkeitsbecken der Bandreinigungseinrichtung 65 entfallen könnte. Beide Endlosbänder 51, 53 könnten durch ein einziges Flüssigkeitsbecken der Bandeinigungseinrichtung 65 hindurchgeführt werden.

Indem die Belege zwischen die beiden Endlosbänder 51, 53 genommen werden, können sie zuverlässig der Scaneinheit 20 zugeführt, optisch abgetastet und wieder abtransportiert werden. Weil die Belege durch die Endlosbänder flächig aufgenommen, fixiert und zusammen mit den Endlosbändern 51, 53 bewegt werden, sind Belegstau und daraus resultierende Beschädigungen der abzutastenden Belege beim Transport praktisch ausgeschlossen. Des Weiteren dürfen die Belege unregelmäßig geformt sein, es können sogar kleine Fragmente wie Papierschnipsel oder auch brüchige Belege sein. Auch kommt es nicht darauf an, dass die Belege bei der Auflage präzise ausgerichtet werden, wie dies etwa bei den bekannten Dokumenteneinzugsvorrichtungen nötig ist.

### Bezugszeichenliste

- 1: Einrichtung zum Scannen von Belegen
- 20: Scaneinheit
- 21: erste Abtastvorrichtung
- 22: erster Abtasterfassungsbereich
- 23: zweite Abtastvorrichtung
- 24: zweiter Abtasterfassungsbereich
- 25: Scanerfassungsbereich
- 30: Gehäuse
- 40: Standfuß
- 50: Beleg-Transportvorrichtung
- 51: erstes, oberes Endlosband
- 52: erste zugewandte Oberfläche
- 53: zweites, unteres Endlosband
- 54: zweite zugewandte Oberfläche
- 55: Bandlaufrichtung
- 56: transparenter Abschnitt
- 56A: intransparenter Abschnitt
- 57: transparenter Abschnitt
- 57A: intransparenter Abschnitt
- 58: Beleg-Aufnahmebereich
- 59: Beleg-Abgabereich
- 61: Hintergrund
- 62: Hintergrund
- 65: Reinigungseinrichtung
- 66: Trocknungseinrichtung
- 70: elektrostatische Aufladeeinrichtung
- 80: elektrostatische Entladeeinrichtung
- 90: Umlenkreinrichtung
- 91: Bandzentriereinrichtung
- 92: Spanneinrichtung
- 94: Bandführungseinrichtung
- v: Bandlaufgeschwindigkeit

## Patentansprüche

1. Einrichtung (1) zum Scannen von Belegen, umfassend eine Scaneinheit (20) und eine Beleg-Transportvorrichtung (50), wobei die Scaneinheit (20) dazu ausgestaltet ist, in einem Scanerfassungsbereich (25) die Belege optisch abzutasten, wobei die Beleg-Transportvorrichtung (50) ausgestaltet ist, die Belege aufzunehmen, in den Scanerfassungsbereich (25) zu transportieren,
**dadurch gekennzeichnet, dass**
die Beleg-Transportvorrichtung (50) zwei Endlosbänder (51, 53) umfasst, welche zumindest in dem Scanerfassungsbereich (25) parallel zueinander verlaufen und dazu ausgestaltet sind, im Scanerfassungsbereich (25) die Belege zwischen ihren einander zugewandten Bandoberflächen (52, 54) zu führen, und
dass zumindest eines der Endlosbänder (51, 53) einen für die Scaneinheit (20) transparenten Abschnitt (56, 57) aufweist.

2. Einrichtung (10) gemäß Anspruch 1, **dadurch gekennzeichnet, dass** die Endlosbänder (51, 53) in dem Scanerfassungsbereich (25) so verlaufen, dass sich ihre einander zugewandten Oberflächen (52, 54) berühren.

3. Einrichtung (1) gemäß einem der vorhergehenden Ansprüche, **dadurch gekennzeichnet, dass** beide Endlosbänder (51, 53) für die Scaneinheit (20) transparente Abschnitte (56, 57) aufweisen und
dass die Scaneinheit (20) eine erste optische Abtastvorrichtung (21) mit einem ersten optischen Abtasterfassungsbereich (22) und eine zweite optische Aufnahmevorrichtung (23) mit einem zweiten optischen Abtasterfassungsbereich (24) aufweist und der Scanerfassungsbereich (25) durch den ersten Abtasterfassungsbereich (22) und den zweiten Abtasterfassungsbereich (24) gebildet ist, wobei die erste Abtastvorrichtung (21) hinter der Bandoberfläche (52) des einen Endlosbands (51) angeordnet ist und die zweite Abtastvorrichtung (23) hinter der Bandoberfläche (54) des zweiten Endlosbands (53) angeordnet ist und
der zweite Abtasterfassungsbereich (24) in Bandlaufrichtung (55) gegen den ersten Abtasterfassungsbereich (22) versetzt ist, so dass der zweite Abtasterfassungsbereich (24) außerhalb des ersten Abtasterfassungsbereichs (22) angeordnet ist.

4. Einrichtung (1) gemäß einem der vorhergehenden Ansprüche, **dadurch gekennzeichnet, dass** die Beleg-Transportvorrichtung (20) so ausgestaltet ist, dass die beiden Endlosbänder (51, 53) zumindest in dem Scanerfassungsbereich (25) horizontal verlaufen, wobei eines der Endlosbänder ein unteres Endlosband darstellt und das andere der Endlosbänder ein oberes Endlosband darstellt.

5. Einrichtung (1) gemäß dem vorhergehenden Anspruch, weiter aufweisend einen Beleg-Aufnahmebereich (58) in Bandlaufrichtung (55) vor dem Scanerfassungsbereich (25) angeordnet ist, in welchem das untere Endlosband (53) horizontal und bedeckungsfrei vom oberen Endlosband (51) verläuft.

6. Einrichtung (1) gemäß einem der Ansprüche 4 oder 5, weiter aufweisend einen Beleg-Abgabereich (59) in Bandlaufrichtung (55) nach dem Scanerfassungsbereich (25), in welchem das untere Endlosband (53) vertikal und bedeckungsfrei vom oberen Endlosband (51) verläuft.

7. Einrichtung (1) gemäß einem der vorhergehenden Ansprüche, weiter aufweisend: eine Einrichtung zum Reinigen der Endlosbänder.

8. Einrichtung (1) gemäß einem der vorhergehenden Ansprüche, weiter aufweisend: eine Einrichtung zum Trocknen der Endlosbänder (51, 53).

9. Einrichtung (1) gemäß einem der vorhergehenden Ansprüche, weiter aufweisend: eine Einrichtung (70) zum elektrostatischen Aufladen zumindest eines der Endlosbänder (53) und zumindest eine Einrichtung (80) zum elektrostatischen Entladen der Endlosbänder (51, 53), wobei die Einrichtung (70) zum elektrostatischen Aufladen in Bandlaufrichtung (55) vor der dem Scanerfassungsbereich (25) angeordnet ist und zumindest eine Einrichtung (80) zum elektrostatischen Entladen in Bandlaufrichtung (55) hinter dem Scanerfassungsbereich (25) angeordnet ist.

10. Einrichtung (1) gemäß einem der vorhergehenden Ansprüche, weiter aufweisend: eine Bandführungseinrichtung (94), welche die Endlosbänder (51, 53) mittels Luftkisseneffekt senkrecht zur Bandoberfläche führt.

11. Einrichtung (1) gemäß einem der vorhergehenden Ansprüche, weiter aufweisend: eine Bandzentriereinrichtung, (91) welche die Endlosbänder (51, 53) in Bandebene quer zur Laufrichtung zentriert.

12. Verfahren zum Scannen von Belegen, mittels einer Einrichtung (1) gemäß einem der vorherigen Ansprüche, wobei die Belege mittels einer Beleg-Transportvorrichtung (50) aufgenommen und zu einem Scanerfassungsbereich (25) einer Scaneinheit (20) transportiert werden und von der Scaneinheit (20) optisch abgetastet werden,
**dadurch gekennzeichnet, dass**
die Belege mittels zweier Endlosbänder (51, 53) transportiert werden, welche zumindest in dem Scanerfassungsbereich (25) parallel zueinander verlaufen und im Scanerfassungsbereich (25) die Belege zwischen ihren einander zugewandten Bandoberflächen (52, 54) führen und dass zumindest eines der Endlosbänder (51, 53) einen für die Scaneinheit (20) transparenten Abschnitt (56, 57) aufweist.

13. Verfahren gemäß Anspruch 12, **dadurch gekennzeichnet, dass** die Endlosbänder (51, 53) in dem Scanerfassungsbereich (25) so verlaufen, dass sich ihre einander zugewandten Oberflächen (52, 54) berühren.

14. Verfahren gemäß einem der Ansprüche 12-13, **dadurch gekennzeichnet, dass** beide Endlosbänder (51, 53) für die Scaneinheit (20) transparente Abschnitte (56, 57) aufweisen und
dass die Belege durch die Scaneinheit (20) mittels einer ersten optischen Abtastvorrichtung (21) mit einem ersten optischen Abtasterfassungsbereich (22) und mittels einer zweiten optischen Aufnahmevorrichtung (23) mit einem zweiten optischen Abtasterfassungsbereich (24) optisch abgetastet werden aufweist und der Scanerfassungsbereich (25) durch den ersten Abtasterfassungsbereich (22) und den zweiten Abtasterfassungsbereich (24) gebildet ist, wobei die erste Abtastvorrichtung (21) hinter der Bandoberfläche (52) des einen Endlosbands (51) angeordnet ist und die zweite Abtastvorrichtung (23) hinter der Bandoberfläche (54) des zweiten Endlosbands (53) angeordnet ist und
der zweite Abtasterfassungsbereich (24) in Bandlaufrichtung (55) gegen den ersten Abtasterfassungsbereich (22) versetzt ist, so dass der zweite Abtasterfassungsbereich (24) außerhalb des ersten Abtasterfassungsbereichs (22) angeordnet ist.

15. Verfahren gemäß einem der Ansprüche 12-14, **dadurch gekennzeichnet, dass** die beiden Endlosbänder (51, 53) zumindest in dem Scanerfassungsbereich (25) horizontal verlaufen, wobei eines der Endlosbänder ein unteres Endlosband darstellt und das andere der Endlosbänder ein oberes Endlosband darstellt.

## Claims

1. Apparatus (1) for scanning documents, comprising a scanning unit (20) and a document transport device (50), the scanning unit (20) being designed to optically sample the documents in a scan capture region (25), the document transport device (50) being designed to receive the documents and transport them into the scan capture region (25),
**characterized in that**
the document transport device (50) comprises two continuous belts (51, 53) which run in parallel with one another at least in the scan capture region (25) and are designed to guide the documents between their mutually facing belt surfaces (52, 54) in the scan capture region (25), and
**in that** at least one of the continuous belts (51, 53) has a portion (56, 57) that is transparent to the scanning unit (20).

2. Apparatus (10) according to claim 1, **characterized in that** the continuous belts (51, 53) run in the scan capture region (25) in such a way that their mutually facing surfaces (52, 54) touch.

3. Apparatus (1) according to one of the preceding claims,
**characterized in that** both continuous belts (51, 53) have portions (56, 57) that are transparent to the scanning unit (20) and
**in that** the scanning unit (20) comprises a first optical sampling device (21) with a first optical sample capture region (22) and a second optical capturing device (23) with a second optical sample capture region (24) and the scan capture region (25) is formed by the first sample capture region (22) and the second sample capture region (24), the first sampling device (21) being arranged behind the belt surface (52) of one continuous belt (51) and the second sampling device (23) being arranged behind the belt surface (54) of the second continuous belt (53) and
the second sample capture region (24) is offset in the belt travel direction (55) with respect to the first sample capture region (22), so that the second sample capture region (24) is arranged outside the first sample capture region (22).

4. Apparatus (1) according to any of the preceding claims,
**characterized in that** the document transport device (20) is designed such that the two continuous belts (51, 53) run horizontally at least in the scan capture region (25), with one of the continuous belts being a lower continuous belt and the other of the continuous belts being an upper continuous belt.

5. Apparatus (1) according to the preceding claim, further comprising a document receiving region (58) arranged upstream of the scan capture region (25) in the belt travel direction (55), in which receiving region the lower continuous belt (53) runs horizontally and without being covered by the upper continuous belt (51).

6. Apparatus (1) according to either claim 4 or claim 5, further comprising a document delivery region (59) downstream of the scan capture region (25) in the belt travel direction (55), in which delivery region the lower continuous belt (53) runs vertically and without being covered by the upper continuous belt (51).

7. Apparatus (1) according to any of the preceding claims, further comprising: an apparatus for cleaning the continuous belts.

8. Apparatus (1) according to any of the preceding claims, further comprising: an apparatus for drying the continuous belts (51, 53).

9. Apparatus (1) according to any of the preceding claims, further comprising: an apparatus (70) for electrostatically charging at least one of the continuous belts (53) and at least one apparatus (80) for electrostatically discharging the continuous belts (51, 53), wherein the apparatus (70) for electrostatically charging is arranged upstream of the scan capture region (25) in the belt travel direction (55) and at least one apparatus (80) for electrostatically discharging is arranged downstream of the scan capture region (25) in the belt travel direction (55).

10. Apparatus (1) according to any of the preceding claims, further comprising: a belt guiding apparatus (94) which guides the continuous belts (51, 53) by means of an air cushion effect perpendicular to the belt surface.

11. Apparatus (1) according to any of the preceding claims, further comprising: a belt centering apparatus (91) which centers the continuous belts (51, 53) in the belt plane transverse to the direction of travel.

12. Method for scanning documents using an apparatus (1) according to any of the preceding claims, the documents being picked up by means of a document transport device (50) and transported to a scan capture region (25) of a scanning unit (20) and being optically sampled by the scanning unit (20),
**characterized in that**
the documents are transported by means of two continuous belts (51, 53) which run in parallel with one another at least in the scan capture region (25) and guide the documents between their mutually facing belt surfaces (52, 54) in the scan capture region (25) and **in that** at least one of the continuous belts (51, 53) has a portion (56, 57) that is transparent to the scanning unit (20).

13. Method according to claim 12, **characterized in that** the continuous belts (51, 53) run in the scan capture region (25) in such a way that their mutually facing surfaces (52, 54) touch.

14. Method according to any of claims 12-13, **characterized in that** both continuous belts (51, 53) have portions (56, 57) that are transparent to the scanning unit (20) and
**in that** the documents are optically sampled by the scanning unit (20) by means of a first optical sampling device (21) with a first optical sample capture region (22) and by means of a second optical capturing device (23) with a second optical sample capture region (24) and the scan capture region (25) is formed by the first sample capture region (22) and the second sample capture region (24), the first sampling device (21) being arranged behind the belt surface (52) of one continuous belt (51) and the second sampling device (23) being arranged behind the belt surface (54) of the second continuous belt (53) and
the second sample capture region (24) is offset in the belt travel direction (55) with respect to the first sample capture region (22), so that the second sample capture region (24) is arranged outside the first sample capture region (22).

15. Method according to any of claims 12-14, **characterized in that** the two continuous belts (51, 53) run horizontally at least in the scan capture region (25), with one of the continuous belts being a lower continuous belt and the other of the continuous belts being an upper continuous belt.

## Revendications

1. Dispositif (1) pour la numérisation de documents, comprenant une unité de numérisation (20) et un appareil de transport de documents (50), dans lequel l'unité de numérisation (20) est configurée pour balayer optiquement les documents dans une zone d'enregistrement par numérisation (25), dans lequel l'appareil de transport de documents (50) est conçu pour recevoir les documents et les transporter dans la zone d'enregistrement par numérisation (25),
**caractérisé en ce que**
l'appareil de transport de documents (50) comprend deux bandes sans fin (51, 53) qui s'étendent parallèlement l'une à l'autre au moins dans la zone d'enregistrement par numérisation (25) et sont conçues pour guider les documents dans la zone d'enregistrement par numérisation (25) entre leurs surfaces de bandes (52, 54) tournées l'une vers l'autre, et
qu'au moins l'une des bandes sans fin (51, 53) présente une section (56, 57) transparente pour l'unité de numérisation (20).

2. Dispositif (10) selon la revendication 1, **caractérisé en ce que** les bandes sans fin (51, 53) s'étendent dans la zone d'enregistrement par numérisation (25) de sorte que leurs surfaces (52, 54) tournées l'une vers l'autre se touchent.

3. Dispositif (1) selon l'une des revendications précédentes,
**caractérisé en ce que** les deux bandes sans fin (51, 53) pour l'unité de numérisation (20) présentent des sections (56, 57) transparentes et
**que** l'unité de numérisation (20) comprend un premier appareil de balayage (21) optique comportant une première zone d'enregistrement par balayage (22) optique et un second appareil de réception (23) optique comportant une seconde zone d'enregistrement par balayage (24) optique et la zone d'enregistrement par numérisation (25) est formée par la première zone d'enregistrement par balayage (22) et la seconde zone d'enregistrement par balayage (24), dans lequel le premier appareil de balayage (21) est disposé derrière la surface de bande (52) de la première bande sans fin (51) et le second appareil de balayage (23) est disposé derrière la surface de bande (54) de la seconde bande sans fin (53), et
la seconde zone d'enregistrement par balayage (24) est décalée par rapport à la première zone d'enregistrement par balayage (22) dans le sens d'avance de bandes (55), de sorte que la seconde zone d'enregistrement par balayage (24) est située à l'extérieur de la première zone d'enregistrement par balayage (22).

4. Dispositif (1) selon l'une des revendications précédentes,
**caractérisé en ce que** l'appareil de transport de documents (20) est conçu de sorte que les deux bandes sans fin (51, 53) s'étendent horizontalement au moins dans la zone d'enregistrement par numérisation (25), dans lequel l'une des bandes sans fin constitue une bande sans fin inférieure et l'autre parmi les bandes sans fin constitue une bande sans fin supérieure.

5. Dispositif (1) selon la revendication précédente, présentant en outre une zone de réception de documents (58) qui est disposée en amont de la zone d'enregistrement par numérisation (25) dans le sens d'avance de bandes (55), dans laquelle zone de réception la bande sans fin inférieure (53) s'étend horizontalement et sans être recouverte par la bande sans fin supérieure (51).

6. Dispositif (1) selon l'une des revendications 4 ou 5, présentant en outre une zone de dépôt de documents (59) dans le sens d'avance de bandes (55) en aval de la zone d'enregistrement par numérisation (25), dans laquelle zone de dépôt la bande sans fin inférieure (53) s'étend verticalement et sans être recouverte par la bande sans fin supérieure (51).

7. Dispositif (1) selon l'une des revendications précédentes, présentant en outre : un dispositif pour le nettoyage des bandes sans fin.

8. Dispositif (1) selon l'une des revendications précédentes, présentant en outre : un dispositif pour le séchage des bandes sans fin (51, 53).

9. Dispositif (1) selon l'une des revendications précédentes, présentant en outre : un dispositif (70) pour la charge électrostatique d'au moins l'une des bandes sans fin (53) et au moins un dispositif (80) pour la décharge électrostatique des bandes sans fin (51, 53), dans lequel le dispositif (70) pour la charge électrostatique est disposé en amont de la zone d'enregistrement par numérisation (25) dans le sens d'avance de bandes (55) et au moins un dispositif (80) pour la décharge électrostatique est disposé en aval de la zone d'enregistrement par numérisation (25) dans le sens d'avance de bandes (55).

10. Dispositif (1) selon l'une des revendications précédentes, présentant en outre : un dispositif de guidage de bandes (94) qui guide les bandes sans fin (51, 53) perpendiculairement à la surface de bande par effet de coussin d'air.

11. Dispositif (1) selon l'une des revendications précédentes, présentant en outre : un dispositif de centrage de bandes (91) qui centre les bandes sans fin (51, 53) dans le plan de bandes transversalement au sens d'avance.

12. Procédé pour la numérisation de documents, au moyen d'un dispositif (1) selon l'une des revendications précédentes, dans lequel les documents sont reçus au moyen d'un appareil de transport de documents (50) et sont transportés vers une zone d'enregistrement par numérisation (25) d'une unité de numérisation (20) et sont balayés optiquement par l'unité de numérisation (20),
**caractérisé en ce que**
les documents sont transportés au moyen de deux bandes sans fin (51, 53) qui s'étendent parallèlement l'une à l'autre au moins dans la zone d'enregistrement par numérisation (25) et qui, dans la zone d'enregistrement par numérisation (25), guident les documents entre leurs surfaces de bandes (52, 54) tournées l'une vers l'autre, et **en ce qu'**au moins l'une des bandes sans fin (51, 53) présente une section (56, 57) transparente pour l'unité de numérisation (20).

13. Procédé selon la revendication 12, **caractérisé en ce que** les bandes sans fin (51, 53) s'étendent dans la zone d'enregistrement par numérisation (25) de sorte que leurs surfaces (52, 54) tournées l'une vers l'autre se touchent.

14. Procédé selon l'une des revendications 12 à 13, **caractérisé en ce que** les deux bandes sans fin (51, 53) pour l'unité de numérisation (20) présentent des sections (56, 57) transparentes, et
**que** les documents sont balayés optiquement par l'unité de numérisation (20) au moyen d'un premier appareil de balayage (21) optique comportant une première zone d'enregistrement par balayage (22) optique et au moyen d'un second appareil de réception (23) optique comportant une seconde zone d'enregistrement par balayage (24) optique et la zone d'enregistrement par numérisation (25) est formée par la première zone d'enregistrement par balayage (22) et la seconde zone d'enregistrement par balayage (24), dans lequel le premier appareil de balayage (21) est disposé derrière la surface de bande (52) de la première bande sans fin (51) et le second appareil de balayage (23) est disposé derrière la surface de bande (54) de la seconde bande sans fin (53), et
la seconde zone d'enregistrement par balayage (24) est décalée par rapport à la première zone d'enregistrement par balayage (22) dans le sens d'avance de bandes (55), de sorte que la seconde zone d'enregistrement par balayage (24) est située à l'extérieur de la première zone d'enregistrement par balayage (22).

15. Procédé selon l'une des revendications 12 à 14, **caractérisé en ce que** les deux bandes sans fin (51, 53) s'étendent horizontalement au moins dans la zone d'enregistrement par numérisation (25), dans lequel l'une des bandes sans fin constitue une bande sans fin inférieure et l'autre parmi les bandes sans fin constitue une bande sans fin supérieure.
